# EUROPÄISCHE PATENTSCHRIFT

(11) **EP 3 250 836 B1**
(45) Veröffentlichungstag und Bekanntmachung des Hinweises auf die Patenterteilung: **28.11.2018**
(21) Anmeldenummer: 16711973.4
(22) Anmeldetag: 22.01.2016
(51) Int. Cl.: F16C 17/02, F16C 33/10, F16C 33/12, F16H 57/04, F16H 57/08

(54) **GLEITLAGERANORDNUNG EINES DREHELEMENTS AUF EINEM LAGERBOLZEN, INSBESONDERE EINES PLANETENRADES AUF EINEM PLANETENRADBOLZEN EINES PLANETENRADGETRIEBES**
SLIDING BEARING ARRANGEMENT OF A ROTATING ELEMENT ON A BOLT, IN PARTICULAR OF A PLANET GEAR ON A BOLT OF A PLANET CARRIER OF A PLANETARY GEAR TRAIN
PALIER LISSE D'UN ÉLÉMENT ROTATIF SUR UN BOULON DE COUSSINET, NOTAMMENT D'UN PIGNON SATELLITE SUR UN ARBRE DE PIGNON SATELLITE D'UN ENGRENAGE PLANÉTAIRES

(30) Priorität: 26.01.2015 DE 102015201248
(43) Veröffentlichungstag der Anmeldung: 06.12.2017
(73) Patentinhaber: Schaeffler Technologies AG & Co. KG, 91074 Herzogenaurach (DE)
(72) Erfinder: KRUHÖFFER, Wolfram, 91086 Aurachtal (DE); PLOGMANN, Michael, 91074 Herzogenaurach (DE); SOYKA, Markus, 91074 Herzogenaurach (DE); CLAUS, Sven, 90431 Nürnberg (DE)
(86) Internationale Anmeldenummer: PCT/DE2016/200030
(87) Internationale Veröffentlichungsnummer: WO 2016/119788

(56) Entgegenhaltungen:
- EP-A1- 1 857 712
- EP-A1- 2 383 480
- DE-A1- 2 702 321
- DE-U1- 20 023 443
- US-A1- 2012 114 488
- US-A1- 2014 291 060

## Beschreibung

Die Erfindung betrifft eine Gleitlageranordnung eines Drehelements auf einem Lagerbolzen, umfassend einen Lagerbolzen, der wenigstens einen an der Bolzenaußenseite mündenden Schmiermittelkanal aufweist, eine auf diesem drehfest angeordnete Lagerhülse mit einer am Außenumfang ausgebildeten ersten Lauffläche, und ein auf der Lagerhülse drehgelagertes Drehelement mit einer am Innenumfang ausgebildeten zweiten Lauffläche, die auf der ersten Lauffläche gleitgelagert ist.

Drehlagerungen auf Gleitlagerbasis kommen in unterschiedlichsten Anwendungen zum Einsatz. Ihnen gemein ist stets die Gleitlagerung eines Drehelements, z.B. eines Zahnrads, auf einem Lagerbolzen. Ein Beispiel hierfür ist die Lagerung eines Planetenrads auf einem Planetenradbolzen eines Planetenradgetriebes. Planetenradgetriebe kommen in unterschiedlichsten Anwendungsbereichen zum Einsatz. Zunehmend werden auch sehr großdimensionierte Planetenradgetriebe gebaut, beispielsweise für die Verwendung in Windkraftanlagen. Insbesondere bei derartigen Großgetrieben kommt der Langlebigkeit des Getriebes eine zentrale Bedeutung zu, da ein einfacher Austausch von Getriebekomponenten nicht ohne weiteres möglich ist.

Es ist bekannt, die Planetenräder auf den entsprechenden Planetenradbolzen des Getriebes über Gleitlager zu lagern, siehe beispielsweise die gattungsbildende EP 2 383 480 B1. Um diese Gleitlagerung möglichst verschleißfest auszulegen ist einer der Gleitlagerpartner, beispielsweise eine auf den Planetenradbolzen aufgesetzte Lagerhülse, aus einem Gleitlagerwerkstoff, zusätzlich ist eine besondere Kanalgeometrie zur Ermöglichung einer Schmierstoffversorgung des Gleitlagerbereichs vorgesehen, umfassend einen axialen im Planetenradbolzen geführten Zuführkanal, von dem ein oder mehrere Radialkanäle abgehen, die wiederum mit Durchbrechungen der auf dem Planetenradbolzen aufgesetzten Gleitlagerhülse kommunizieren. Diese Durchbrechungen münden in am Au-ßenumfang der Lagerhülse ausgebildeten Schmierstofftaschen, aus welchen das Schmiermittel, üblicherweise Öl, in den Schmierspalt tritt. An der Lagerhülse ist ferner eine außenseitig vorgesehene, in axialer Richtung verlaufende Nut vorgesehen, die als Schmiermittelsammelnut dient. Das Planetenrad läuft mit seiner üblicherweise unprofilierten, zylindrischen Lauffläche auf der wie beschrieben entsprechend ausgebildeten und im Laufflächenbereich profilierten Lagerhülse aus dem Gleitlagerwerkstoff.

Der Erfindung liegt die Aufgabe zugrunde, eine Gleitlageranordnung, insbesondere für ein Planetenrad eines Planetenradgetriebes, anzugeben, die extrem verschleißfest ist und damit eine hohe Lebensdauer aufweist, gleichzeitig aber auch einfach herstellbar ist.

Zur Lösung dieses Problems ist bei einer Gleitlageranordnung der eingangs genannten Art erfindungsgemäß vorgesehen, dass die Lagerhülse eine am Innenumfang ausgebildete, mit dem radialen Schmiermittelkanal kommunizierende Radialnut und wenigstens eine radial von dieser abzweigende, zum Drehelement offene Durchbrechung aufweist, und dass das Drehelement eine am Innenumfang ausgebildete, mit der Durchbrechung kommunizierende Radialnut aufweist, wobei die erste Lauffläche härter als die zweite Lauffläche ist.

Ein solches Drehelement ist insbesondere, jedoch nicht notwendigerweise ein Planetenrad, ein Lagerbolzen insbesondere, jedoch nicht notwendigerweise ein Planetenradbolzen, d.h. die Gleitlageranordnung ist Teil eines Planetenradgetriebes. Wenngleich nachfolgend von einem Planetenrad und einem Planetenradbolzen die Rede ist, stehen diese Begriffe synonym für die allgemeinen Begriffe Drehelement und Lagerbolzen.

Die Erfindung zeichnet sich durch eine besondere Schmierstoffversorgung sowie unterschiedliche Auslegung der Laufflächenhärte der Reibpartner aus. Wie beschrieben ist die erste Lauffläche, also die Lagerhülsenseitige Lauffläche, härter als die zweite Lauffläche am Drehelement, also z.B. dem Planetenrad. Das heißt, dass die Lagerhülse respektive die zweite Lauffläche verschleißfester als das Drehelement respektive dessen Lauffläche ist. Es wird also definiert unterschieden zwischen einem je nach Laufflächenhärte nahezu verschleißfesten ersten Lauffläche respektive verschleißfesten Lagerhülse und dem weniger verschleißfesten Drehelement, also z.B. dem üblicherweise aus gehärtetem Stahl gefertigten Planetenrad. Die lagerhülsenseitige erste Lauffläche ist entsprechend härter ausgelegt, sie kann auch eine gewisse Zähigkeit aufweisen, eine verschleißbedingte Konturänderung ist, selbst unter Mischreibung, lagerhülsenseitig nicht zu erwarten. Verschleiß wird lediglich am weniger verschleißfesten Drehelement, üblicherweise aus weichem oder vergütetem, bevorzugt aber gehärteten Stahl auftreten. Da das Drehelement umläuft und unter einer stillstehender Last umlaufend belastet wird, wird der Verschleiß um den Umfang gleichmäßig sein. Aufgrund dieses umlaufenden Verschleißes am sich bewegenden Drehelement kommt es verschleißbedingt lediglich zu einer Lagespieländerung über die lange Betriebszeit des Getriebes, die sich nur in sehr geringem Maß auf den Lagerbetrieb als solchen auswirkt, nicht aber zu einer Konturänderung, das heißt, dass selbst bei Verschleiß die kreiszylindrische Geometrie erhalten bleibt.

Bei der Verwendung eines sehr verschleißfesten Materials an der Lagerhülse können sehr hohe Flächenpressungen im Gleitlager übertragen werden. Um für eine gute Ausbildung des Schmierfilms respektive des Schmierfilmdrucks im Lagerspalt zu sorgen, ist eine sichere Schmiermittelversorgung, üblicherweise Ölversorgung, wichtig. Zu diesem Zweck ist bolzenseitig ein an der Bolzenaußenseite mündender Schmiermittelkanal vorgesehen. Konkret kann z. B. ein axialer Schmiermittelkanal sowie wenigstens ein radial davon abzweigender Schmiermittelkanal vorgesehen, der zur Lagerhülse läuft. Diese weist an ihrem Innenumfang eine Radialnut auf, die mit dem radialen bolzenseitigen Schmiermittelkanal kommuniziert. Diese Radialnut dient als Schmiermittelsammelnut. Von dieser Radialnut läuft wenigstens eine zum Drehelement hin offene Durchbrechung zur ersten Lauffläche, so dass aus der Radialnut Schmiermittel in den Laufflächenbereich gelangen kann. Zusätzlich ist nun weiterhin am Drehelement, also am quasi verschleißbehafteten Bauteil eine am Innenumfang ausgebildete, also in der zweiten Lauflagefläche eingearbeitete und mit der lagerhülsenseitigen Durchbrechung kommunizierende weitere Radialnut vorgesehen. Das heißt, dass erfindungsgemäß die weichere zweite Lauffläche mit einer Radialnut versehen ist, während die härtere erste Lauffläche keine solche Radialnut aufweist. Die drehelementseitige Radialnut ermöglicht eine verbesserte Schmierstoffzufuhr. In ihr sammelt sich Schmiermittel, das aufgrund der Bewegung des Drehelements zum Teil mitgenommen wird und aus dieser Radialnut auch in den engsten Bereich nachfließen kann, sollte dort Schmierstoff benötigt werden, beispielsweise aufgrund der Dynamik des Lagers. Das Lager wird somit besser mit ausreichend kühlem Schmierstoff versorgt, da das Drehelement quasi sein eigenes, von der Radialnut gebildetes Schmiermittelreservoir aufweist bzw. so das Schmiermittel nahe dem Bereich vorgehalten wird, der hoch belastet ist.

Die am Drehelement vorgesehene Radialnut kann direkt in das Drehelement bzw. die unmittelbar an ihm ausgebildete Lauffläche eingebracht sein. Sie kann aber auch mittels zweier in das Drehelement eingepresster, zur Bildung der Radialnut axial definiert beabstandeter Hülsen gebildet sein, die dann die drehelementseitige Lauffläche aufweisen. Der Nutquerschnitt kann beliebig sein, z. B. rechteckig, trapezförmig, gerundet, halbrund, angesenkt oder dergleichen.

Des Weiteren findet wie beschrieben ein etwaiger Verschleiß fast ausschließlich auf Seiten des weicheren Drehelements statt. Das heißt, dass es umfangsmäßig aufgrund der Bewegung des Drehelements gleichmäßig beidseits der Radialnut zum Flächenverscheiß kommt. Die Ausbildung etwaiger verschleißbedingter Kanten, die eine axiale Beweglichkeit des Drehelements einschränken würden, ist in diesem Fall nicht gegeben. Dies wäre anders, wenn die Radialnut nicht am Drehelement, sondern wie im Stand der Technik an der Lagerhülse vorgesehen wäre. Denn bei der Lagerhülse handelt es sich um das verschleißfeste Bauteil. Verschleißbedingt würde sich nun in diesem Fall das Drehelement quasi in die lagerhülsenseitige Radialnut "eingraben", das heißt, dass am Drehelement laufflächenseitig Kanten entstehen würden, die die axiale Beweglichkeit einschränken würden. Dies ist jedoch vorteilhaft durch die Ausbildung der Radialnut am Drehelement vermieden.

Darüber hinaus ist eine einfachere Fertigung des oft groß dimensionierten Drehelements, insbesondere in Form eines Planetenrades, durch die Ausbildung der Radialnut am Drehelement bzw. dem Planetenrad selbst gegeben. Denn dies ermöglicht es, die Lauffläche respektive den Innenumfang des Drehelements von beiden Seiten her bearbeiten zu können, und zwar jeweils von der Stirnfläche bis zur jeweiligen Radialnutkante. Im Hinblick auf die Größe eines beispielsweise für ein Windanlagengetriebe auszulegendes Planetenrad mit einer Laufflächenbreite von z. B. 20 cm oder mehr ist es problematisch, die Lauffläche versatz- und kantenfrei zu fertigen, insbesondere wenn hierfür das Planetenrad umgespannt werden muss. Dies ist vorliegend nicht mehr gegeben, da die Lauffläche durch die Radialnut ohnehin geteilt ist und ein Arbeiten von der Planetenradstirnseite zur Nutkante ohne weiteres möglich ist.

Bevorzugt sind zwei umfangsmäßig zueinander versetzt angeordnete radiale Schmiermittelkanäle im Lagerbolzen, die mit der Radialnut der Lagerhülse kommunizieren, vorgesehen, wobei die Schmiermittelkanäle vorzugsweise um 180 ° zueinander versetzt sind.

Des Weiteren sind bevorzugt auch zwei umfangsmäßig zueinander versetzt angeordnete Lagerhülsenseitige Durchbrechungen vorgesehen. Auch diese sind bevorzugt um 180° zueinander versetzt, wobei sie in der Montagestellung der Lagerhülse auf dem Lagerbolzen bevorzugt, jedoch nicht notwendigerweise direkt mit dem jeweiligen bolzenseitigen radialen Schmiermittelkanal fluchten. Sie sind des Weiteren bevorzugt 90° versetzt zur Lastzone angeordnet, so dass der Schmiermitteldurchtritt durch die Durchbrechung dementsprechend winkelmäßig vor der Lastzone, wo also der Schmierspalt am schmälsten ist, erfolgt und mithin das Schmiermittel in jedem Fall in den immer schmäler werdenden Schmierspalt gezogen wird.

Bevorzugt mündet die oder jede lagerhülsenseitige Durchbrechung in einer in die erste Lauffläche eingebrachten, sich axial erstreckenden Schmiermitteltasche. Über diese Schmiermitteltasche, in der sich das Schmiermittel natürlich ebenfalls sammelt, ist eine axial gesehen relativ breite Zuführzone gegeben, über die das Schmiermittel in den Laufflächenbereich gelangt. Die Schmiermitteltasche, die bevorzugt als Axialnut ausgeführt ist, sollte sich über wenigstens die halbe Breite der ersten Lauffläche erstrecken, bevorzugt auch mehr, wobei bei der Auslegung der Nutlänge sicherzustellen ist, dass unabhängig von der Axialposition des Drehelements die Axialnut stets von der zweiten Lauffläche übergriffen ist.

In Weiterbildung der Erfindung kann ferner vorgesehen sein, dass zwei in Bezug auf den Lagerbolzen drehfest angeordnete Axiallagerscheiben, gegen die das axial bewegbare Drehelement anläuft vorgesehen sind, und dass von der lagerhülsenseitigen Radialnut, also der zum Lagerbolzen hin offenen Radialnut, zu jeder axialen Lagerhülsenstirnseite wenigstens eine Axialnut abzweigt, die an der jeweiligen Lagerhülsenstirnseite mündet. Das dort anstehende Schmiermittel kann genutzt werden, um dem Axialgleitlager gezielt Schmiermittel zuzuführen. Wie beschrieben weist die Gleitlageranordnung zwei Axiallagerscheiben auf, gegen die das Drehelement anläuft, also axial gelagert ist. Eine solche Axiallageranordnung ist insbesondere im Planetenradgetriebe üblicherweise vorgesehen. Natürlich ist eine Schmiermittelversorgung dieses Axiallagerbereichs bereits dadurch gegeben, dass Schmiermittel in den Lagerspalt des Radiallagers gelangt, aus dem es, da dieser zur Lastzone hin immer schmäler wird, auch seitlich herausgedrückt wird, so dass es in den Axiallagerbereich gelangt. Gleichwohl ist es zweckmäßig, auch eine definierte Axiallagerschmierung zu realisieren, wozu die beiden lagerhülsenseitigen Axialnuten dienen. Über sie gelangt vom Lagerbolzen zugeführtes Schmiermittel, das in die zum Bolzen hin offene, am Innenumfang der Lagerhülse ausgebildete Radialnut gelangt, zugeführtes Schmiermittel direkt in den Bereich der Axiallagerscheiben, so dass es von dort in den eigentlichen Reibbereich gelangt.

Dabei können die beiden von der lagerhülsenseitigen Radialnut abzweigenden und an der jeweiligen Lagerhülsenstirnseite mündenden Axialnuten miteinander fluchten oder umfangsmäßig versetzt zueinander angeordnet sein. In jedem Fall sind die Axialnuten umfangsmäßig so positioniert, dass sie zum Ort des minimalen Schmierspalts, also der eigentlichen Lastzone versetzt positioniert sind. Zweckmäßig ist es, im Bereich der Axialnuten an deren Ende einen Einstich an der Stirnfläche der Lagerhülse vorzusehen, um das Einfließen des Öls in den Gleitbereich zu verbessern.

Die Lagerhülse selbst kann ein einstückiges Bauteil sein, sie kann aber auch aus zwei axial aneinander anschließenden Lagerhülsenabschnitten bestehen. Die Lagerhülse ist wie beschrieben das verschleißfeste Bauteil, wozu die Lagerhülse entsprechend bearbeitet ist und insbesondere zur Bildung der ersten Lauffläche mit einer entsprechenden Hartstoffbeschichtung versehen ist. Ist das Getriebe kleiner, so kann eine einstückige Lagerhülse verwendet werden, die von der Größe her noch als einstückiges Bauteil in einer Beschichtungsanlage beschichtet werden kann. Bei größeren Lagerhülsen empfiehlt sich die Verwendung einer mehrteiligen Lagerhülse, da die einzelnen Lagerhülsenabschnitte in der Beschichtungsanlage separat mit der Laufflächenbeschichtung versehen werden können und im Übrigen auch Bauteile mit in axialer Richtung kleinerer Ausdehnung deutlich besser spangebend bearbeitet, beispielsweise geschliffen oder gehont werden können. Wird eine zweiteilige Lagerhülse verwendet, so können die Lagerhülsenabschnitte auf unterschiedlichste Weise fixiert werden, beispielsweise über Stifte, Schrauben oder durch eine entsprechende kraft-, form- oder stoffschlüssige Fixierung auf den Planetenbolzen selbst.

Im Falle einer zweiteiligen Lagerhülse liegt die Trennebene bevorzugt in einer der Nutflanken der lagerhülsenseitigen Radialnut. Dabei ist auf eine exakte Positionierung der Lagerhülsenabschnitte zu achten. Deren Anordnung kann z. B. formschlüssig erfolgen.

Wie beschrieben ist die Lagerhülse zur Bildung der härteren Laufschicht bevorzugt mit einer entsprechenden verschleißfesten Hartstoffbeschichtung versehen. Als eine solche Hartstoffschicht kann beispielsweise eine Kohlenstoffschicht, oft auch DLC-Schicht (DLC = diamond like carbon) genannt, verwendet werden. Sie kann gegebenenfalls auch metallisch dotiert sein, in diesem Fall handelt es sich dann um eine sogenannte Me-DLC-Schicht, wobei als Dotierung insbesondere Wolframcarbid (WC) verwendet wird. Weiterhin kann als Hartstoffschicht eine Keramikschicht oder eine keramikähnliche Schicht (z. B. nitridkeramisch, oxidkeramisch oder karbidkeramisch, z. B. Siliziumnitrid, Siliziumkarbid bzw. Nitride oder Karbide von Metallen wie Titan, Chrom oder deren Mischphasen) verwendet werden. Auch Kombinationsschichten aus Kohlenstoff- und Keramikschichten sind denkbar.

Die Hartstoffschicht sollte eine Vickershärte HV von mindestens 800 HV aufweisen, vorzugsweise sollte die Vickershärte mindestens 1500 HV betragen. Die Härte der zweiten Lauffläche am Drehelement, also z.B. dem Planetenrad ist wie beschrieben niedriger, sie sollte maximal 800 HV betragen. Bevorzugt weist die erste Lauffläche, also die Hartstoffschicht, eine wenigstens doppelte bis zur dreifachen Härte der zugeordneten Oberflächenschicht respektive Lauffläche des Drehelements auf.

Die lagerhülsenseitige Hartstoffschicht wird bevorzugt auf einem Lagerhülsensubstrat mit einer Randhärte von mindestens 50 HRC aufgebracht. Die Dicke der Hartstoffschicht ist vorzugsweise kleiner als 20 µm, bevorzugt liegt sie im Bereich zwischen 1 - 10 µm und insbesondere im Bereich zwischen 2,5 - 4 µm.

Als besonders geeignet hat sich eine harte diamantartige Beschichtung, wie sie unter der Marke "Triondur®" aus dem Haus der Anmelderin bekannt ist, z.B. "Triondur® CX+".

Die erfindungsgemäße Gleitlageranordnung sieht folglich zum einen die Integration eines definierten tribologischen Laufflächensystems vor, zum anderen auch eine besondere Ausgestaltung der Schmiermittelversorgung insbesondere im Bereich der Laufflächen, also der Radiallagerung, darüber hinaus aber auch bezüglich der Axiallager.

Wie beschrieben handelt es sich bei dem Drehelement insbesondere um ein Planetenrad und bei dem Lagerbolzen insbesondere um einen Planetenradbolzen, beide Teil eines Planetenradgetriebes. Die Erfindung betrifft daher insbesondere auch ein Planetenradgetriebe umfassend wenigstens eine vorstehend beschriebene Gleitlageranordnung.

Weitere Vorteile und Einzelheiten der Erfindung ergeben sich aus den im Folgenden beschriebenen Ausführungsbeispielen sowie anhand der Zeichnungen. Dabei zeigen:
- Figur 1: eine erfindungsgemäße Gleitlageranordnung in einer Schnittansicht als Teilansicht eines Planetenradgetriebes,
- Figur 2: eine Schnittansicht in Richtung der Linie II - II aus Figur 1,
- Figur 3: eine Teilansicht im Schnitt einer einteiligen Lagerhülse einer ersten Ausführungsform,
- Figur 4: eine Teilansicht im Schnitt einer einteiligen Lagerhülse einer zweiten Ausführungsform,
- Figur 5: eine Teilansicht im Schnitt einer geteilten Lagerhülse, und
- Figur 6: eine Teilansicht als Aufsicht auf die Lagerhülse aus Figur 5.

In den Figuren wird exemplarisch eine Gleitlageranordnung eines Planetenradgetriebes beschrieben, umfassend ein Planetenrad (= Drehelement) und einen Lagerbolzen (= Planetenradbolzen), wobei das Planetenrad auf einer am Planetenradbolzen aufgesetzten Lagerhülse gleitgelagert ist.

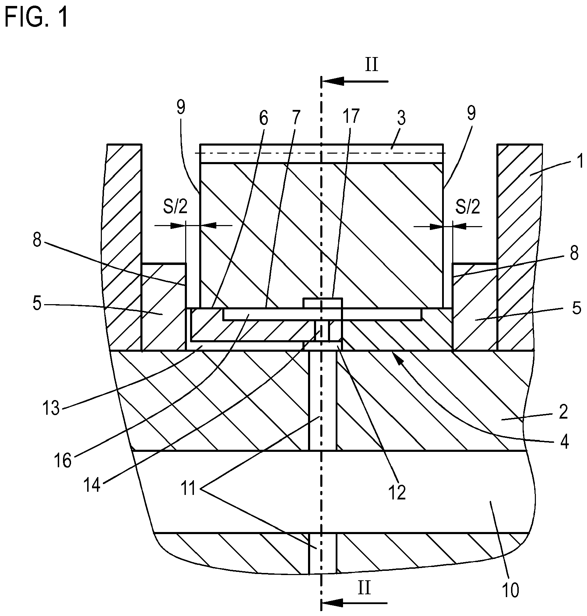

Figur 1 zeigt in Form einer Teilansicht einen Ausschnitt aus einem Planetenradgetriebe umfassend eine erfindungsgemäße Gleitlageranordnung. An einem Planetenradträger 1 ist ein, einen Lagerbolzen bildender Planetenradbolzen 2 angeordnet, der als Lagerachse für ein ein Drehelement bildendes Planetenrad 3 dient. Auf den Planetenradbolzen 2 ist eine Lagerhülse 4 gesetzt, die drehfest mit dem Planetenradbolzen 2 verbunden ist. Die Lagerhülse 4 ist beispielsweise kraft-, form- oder stoffschlüssig am Planetenradbolzen 2 befestigt. Beidseits der Lagerhülse 4 sind zwei Axiallagerscheiben 5 angeordnet, die ihrerseits bolzenseitig respektive planetenträgerseitig fixiert sind. Sie dienen als axiale Anlaufscheiben für das geringfügig axial bewegliche Planetenrad 3.

Die Lagerhülse 4 weist an ihrer Außenfläche eine erste Lauffläche 6 auf, die bevorzugt mittels einer Hartstoffschicht, die beispielsweise in einem PVD-Verfahren appliziert wurde, gebildet ist. Sie weist eine Härte von mindestens 1500 HV auf. Bevorzugt handelt es sich um eine DLC-Schicht. Auf dieser ersten Lauffläche 6 läuft das Planetenrad 3, das seinerseits eine zweite Lauffläche 7 aufweist, die eine deutlich geringere Oberflächenhärte aufweist, beispielsweise von maximal 800 HV. Aus diesen Härteunterschieden folgt, dass die Lagerhülse 4 respektive deren erste Lauffläche 6 verschleißfest gegenüber der verschleißbehafteten zweiten Lauffläche 7 des Planetenrades 3 ist. Sollte es zu Verschleiß kommen, so findet dieser ausschließlich am Planetenrad 3 statt. Da sich das Planetenrad 3 aber um den Planetenradbolzen 2 und damit auch um die Lagerhülse 4 dreht, ergibt sich ein umfänglicher gleichmäßiger Verschleiß, so dass das radiale Verschleißvolumen insgesamt äußerst gering ist und sich auch über lange Zeit nur in einer minimalen Änderung des Lagerspiels zeigt.

Die Axiallagerung erfolgt über die Axiallagerscheiben 5, die jeweils axiale Lagerflächen 8 aufweisen, gegen die das Planetenrad 3 mit seiner jeweiligen Stirnfläche 9 läuft. An dieser Stelle kann auch eine abgesetzte Fläche angebracht werden. Denkbar ist es auch in diesem Bereich ein entsprechendes Tribologiesystem zu integrieren, beispielsweise indem die Axiallagerscheiben 5 im Bereich ihrer Lagerflächen 8 ebenfalls eine entsprechende Hartstoffbeschichtung aufweisen.

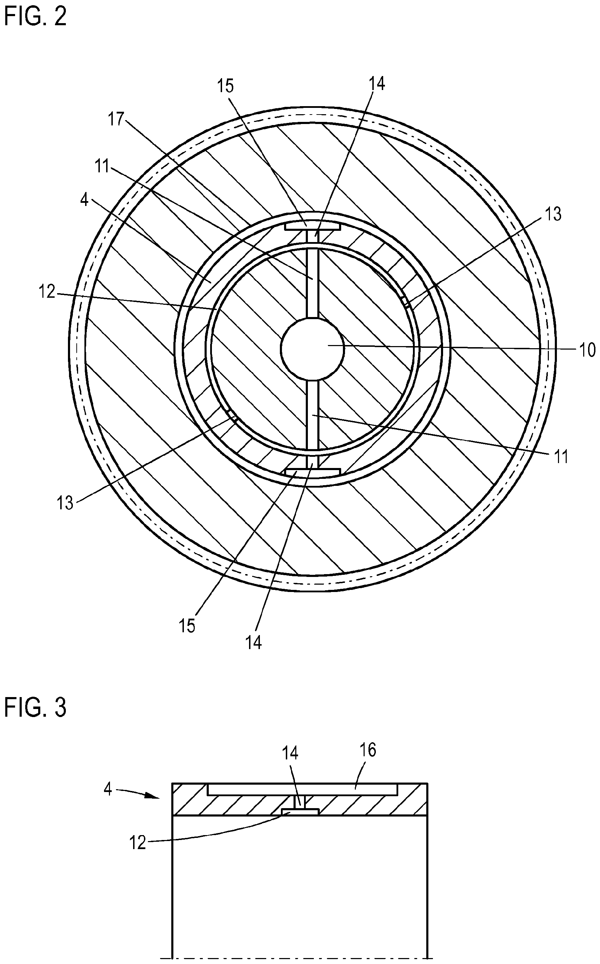

Um eine gute Schmiermittelversorgung sowohl des Radiallagerbereichs, gebildet über die Laufflächen 6 und 7, als auch des Axiallagerbereichs, gebildet durch die Lagerflächen 8 und die Stirnflächen 9, zu ermöglichen, ist ein entsprechendes Schmiermittelkanalsystem vorgesehen. Dieses umfasst einen im Planetenradbolzen 2 ausgebildeten, bolzenmittig angeordneten axialen Schmiermittelkanal 10, von dem aus zwei radiale Schmiermittelkanäle 11 abzweigen, siehe hierzu auch Figur 2. An der Lagerhülse 4 ist am Innenumfang eine zum Planetenradbolzen 2 hin offene Radialnut 12 ausgebildet, die mit den beiden Schmiermittelkanälen 11 kommuniziert, das heißt, dass über diese zugeführtes Schmiermittel, also Öl, in diese umlaufende Radialnut gelangt. Von dieser Radialnut 12 gehen nun im gezeigten Beispiel Axialnuten 13 ab, die zu den beiden Stirnflächen der Lagerhülse 4 laufen und dort münden. Figur 1 zeigt eine dieser beiden Axialnuten 13, die im dort gezeigten Beispiel zum linken Axiallager läuft. Die andere Axialnut 13, die zum rechten Axiallager läuft, ist umfangsmäßig versetzt dazu ausgebildet. Figur 2 zeigt exemplarisch die unterschiedliche Position der beiden Axialnuten. Selbstverständlich wäre es auch denkbar, jede Axialnut 13 zu beiden Seiten der Lagerhülse 4 durchlaufen zu lassen. Der jeweilige Winkelversatz ist so gewählt, dass sich die Axialnuten 13 beabstandet zur eigentlichen Lastzone, also dem Ort des minimalen Schmierspalts zwischen den Laufflächen 6 und 7, befinden.

Über die Axialnuten 13 gelangt Schmiermittel direkt an die Axiallagerscheiben 5 und den zwischen dem Drehelement 3 und den Axiallagerscheiben 5 gegebenen minimalen Schmierspalt in den Anlaufbereich der Stirnflächen 9 des Planetenrades 3 an den Lagerflächen 8. Hierüber ist eine zusätzliche Schmierung gegeben, soweit dieser Bereich nicht bereits durch aus dem Schmierspalt zwischen den Laufflächen 6 und 7 herausgedrücktes Schmiermittel versorgt wird.

Zur Versorgung der Laufflächen respektive des Schmierspalts sind an der Lagerhülse 4 zwei Durchbrechungen 14 vorgesehen, die in einer an der Lagerhülsenaußenseite ausgebildeten Schmiermitteltasche 15 münden. Über diese Durchbrechungen 14, die als Bohrung oder Langloch ausgeführt sein können, gelangt Schmiermittel aus der Radialnut 12 in die Schmiermitteltasche 15, die - siehe Figur 1 - bevorzugt als Axialnut 16 ausgeführt ist. Diese Axialnut 16 erstreckt sich über wenigstens die Hälfte der ersten Lauffläche 6. Sie ist so lang bemessen, dass sie sich unter Berücksichtigung des Axialspiels des Planetenrades 3 möglichst weit über die zweite Lauffläche 7 erstreckt, so dass die Lauffläche 7 möglichst großflächig benetzt wird respektive über die Lauffläche 7 Schmiermittel in den Schmierspalt gezogen wird.

Am Planetenrad 3, in die zweite Lauffläche 7 eingearbeitet, ist ferner eine Radialnut 17 vorgesehen, die - dies gilt auch für die Radialnut 12 und die Durchbrechungen 14 - ebenfalls axial gesehen im Wesentlichen mittig angeordnet ist. Diese Radialnut 17 dient als Schmiermittelsammelnut, das heißt, dass das umlaufende Planetenrad 3 stets ein Schmiermittelreservoir mit sich führt. Aus dieser Radialnut 17 kann nun bei Bedarf Schmiermittel auch in dem engsten Bereich des Lagerspaltes nachfließen, sollte dort aus Dynamikgründen Schmiermittel benötigt werden.

Wie beschrieben ist das Planetenrad 3 im Bereich seiner Lauffläche 7 das verschleißende Bauteil. Kommt es zu einem Verschleiß, der wie beschrieben wenn überhaupt nur sehr gering ist, so kommt es aufgrund der Integration der Radialnut 17 am Planetenrad 3 zu keinerlei verschleißbedingter Kanten- oder Gratbildung, da die Lauffläche 3 beidseits der Radialnut 17 vollkommen gleichmäßig verschleißt und da die erste Lauffläche 6 der Lagerhülse 4 - abgesehen von der Profilierung über die Axialnut 16 - ansonsten ebenfalls bevorzugt, aber nicht notwendigerweise unprofiliert ist. Da sie das härtere Bauteil ist, ist sie verschleißgeometriebestimmend. Das heißt, dass es insgesamt zu einem homogenen, gleichmäßigen Umfangsverschleiß ohne jedwede Kantenbildung kommt, die eine axiale Beweglichkeit des Planetenrades 3 einschränken würden.

Das Planetenrad 3 ist, siehe Figur 1, axial gesehen geringfügig beweglich, wie durch die jeweilige Spielangabe S/2 angegeben ist.

Figur 3 zeigt eine erste Ausführungsform einer Lagerhülse 4, die hier einteilig ausgeführt ist. Gezeigt ist die Radialnut 12, die Durchbrechung 14 sowie die Axialnut 16. Bei dieser Ausgestaltung ist exemplarisch keine Axialnut 13 vorgesehen, diese ist wie ausgeführt nicht zwingend zu realisieren, da bereits über das aus dem Schmierspalt verdrängte Schmiermittel eine gute Versorgung der beidseitigen Axiallager gegeben ist.

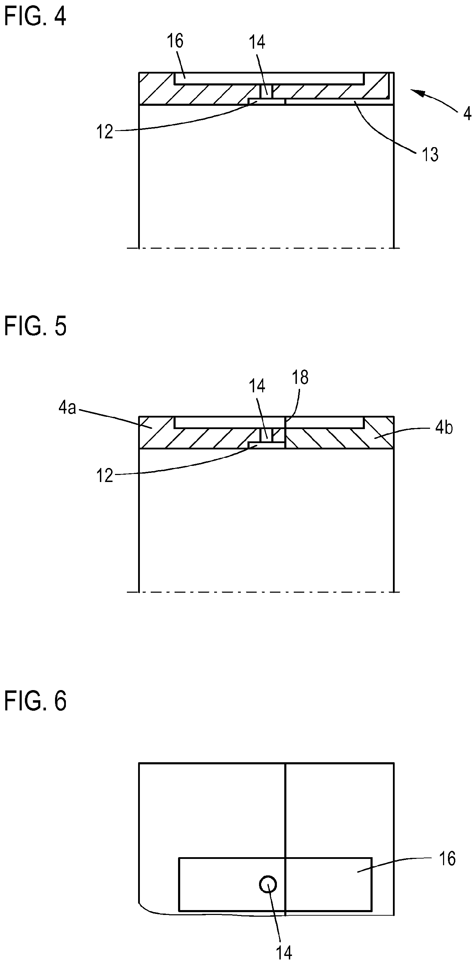

Demgegenüber zeigt Figur 4 eine Ausführungsform der Lagerhülse 4, die eine Axialnut 13 aufweist. Ansonsten entspricht die Ausgestaltung der Lagerhülse 4 der aus Figur 3. Die Axialnut 13 kann gegebenenfalls auch in Richtung oder bis zur gegenüberliegenden Stirnfläche der Lagerhülse 4 weitergeführt sein.

Die Figuren 5 und 6 zeigen schließlich eine Ausführungsform der Lagerhülse 4, wie sie vergleichbar in Figur 1 dargestellt ist. Es handelt sich um eine zweiteilige Lagerhülse, bestehend aus den beiden Lagerhülsenabschnitten 4a und 4b, die axial aneinander anschließen. Die Trennebene 18 verläuft radial gesehen entlang einer Flanke der Radialnut 12. Die beiden Lagerhülsenabschnitte 4a, 4b können über Verbindungsmittel wie Schrauben oder Stifte bezüglich einander fixiert sein, sie können aber auch über ihre jeweilige Fixierung am Planetenradbolzen 2 positionsfest zueinander angeordnet sein.

Der Aufsicht aus Figur 6 ist schließlich noch die Lage der Durchbrechung 14 in der Axialnut 16 zu entnehmen, die sich im gezeigten Beispiel über weit mehr als drei Viertel der Lagerhülsenlänge erstreckt. Die Länge der Axialnut 16 ist stets so zu bemessen, dass unter Berücksichtigung des Axialspiels des Planetenrades 3 die Axialnut 16 stets von der Lauffläche 7 überdeckt ist.

Die Figuren 5 und 6 unterscheiden sich insoweit von der Ausgestaltung der Lagerhülse 4 gemäß Figur 1, als die Lagerhülse 4 aus Figur 1 noch die beiden Axialnuten 13 aufweist, von denen nur eine in Figur 1 gezeigt ist. Das heißt, dass auch die zweiteilige Lagerhülse mit oder ohne Axialnuten ausgeführt sein kann.

### Bezugszeichenliste

- 1: Planetenradgetriebe
- 2: Planetenradbolzen
- 3: Planetenrad
- 4: Lagerhülse
- 4a: Lagerhülsenabschnitt
- 4b: Lagerhülsenabschnitt
- 5: Axiallagerscheibe
- 6: Lauffläche
- 7: Lauffläche
- 8: Lagerfläche
- 9: Stirnfläche
- 10: Schmiermittelkanal
- 11: Schmiermittelkanal
- 12: Radialnut
- 13: Axialnut
- 14: Durchbrechung
- 15: Schmiermitteltasche
- 16: Axialnut
- 17: Radialnut
- 18: Trennebene

- S/2: Spielangabe

## Patentansprüche

1. Gleitlageranordnung eines Drehelements auf einem Lagerbolzen, umfassend einen Lagerbolzen (2), der wenigstens einen an der Bolzenaußenseite mündenden Schmiermittelkanal (11) aufweist, eine auf diesem drehfest angeordnete Lagerhülse (4) mit einer am Außenumfang ausgebildeten ersten Lauffläche (6), und ein auf der Lagerhülse (4) drehgelagertes Drehelement (3) mit einer am Innenumfang ausgebildeten zweiten Lauffläche (7), die auf der ersten Lauffläche (6) gleitgelagert ist, **dadurch gekennzeichnet, dass** die Lagerhülse (4) eine am Innenumfang ausgebildete, mit dem radialen Schmiermittelkanal (11) kommunizierende Radialnut (12) und wenigstens eine radial von dieser abzweigende, zum Drehelement (3) offene Durchbrechung (14) aufweist, und dass das Drehelement (3) eine am Innenumfang ausgebildete, mit der Durchbrechung (14) kommunizierende Radialnut (17) aufweist, wobei die erste Lauffläche (6) härter als die zweite Lauffläche (7) ist.

2. Gleitlageranordnung nach Anspruch 1, **dadurch gekennzeichnet, dass** die am Drehelement (3) vorgesehene Radialnut (17) direkt in das Drehelement (3) eingebracht ist, oder dass die am Drehelement (3) vorgesehene Radialnut (17) mittels zweier in das Drehelement (3) eingepresster, zur Bildung der Radialnut (17) am Drehelement (3) axial voneinander beabstandeter Hülsen gebildet ist.

3. Gleitlageranordnung nach Anspruch 1 oder 2, **dadurch gekennzeichnet, dass** die am Drehelement (3) vorgesehene Radialnut (17) einen rechteckigen, trapezförmigen, gerundeten, halbrunden oder angesenkten Querschnitt aufweist.

4. Gleitlageranordnung nach einem der vorangehenden Ansprüche, **dadurch gekennzeichnet, dass** die lagerhülsenseitige Durchbrechung (14) in einer in die erste Lauffläche (6) eingebrachten, sich axial erstreckenden Schmiermitteltasche (15) mündet.

5. Gleitlageranordnung nach Anspruch 4, **dadurch gekennzeichnet, dass** die Schmiermitteltasche (15) als Axialnut (16) ausgeführt ist, die sich über wenigstens die halbe Breite der ersten Lauffläche (6) erstreckt.

6. Gleitlageranordnung nach einem der vorangehenden Ansprüche, **dadurch gekennzeichnet, dass** zwei am Lagerbolzen (2) drehfest angeordnete Axiallagerscheiben (5), gegen die das axial bewegbare Drehelement (3) anläuft vorgesehen sind, und dass von der lagerhülsenseitigen Radialnut (12) zu jeder axialen Lagerhülsenstirnseite wenigstens eine Axialnut (13) abzweigt, die an der jeweiligen Lagerhülsenstirnseite mündet.

7. Gleitlageranordnung nach Anspruch 6, **dadurch gekennzeichnet, dass** die beiden von der lagerhülsenseitigen Radialnut (12) abzweigenden und an der jeweiligen Lagerhülsenstirnseite mündenden Axialnuten (13) miteinander fluchten oder umfangsmäßig versetzt zueinander angeordnet sind.

8. Gleitlageranordnung nach einem der vorangehenden Ansprüche, **dadurch gekennzeichnet, dass** die Lagerhülse (4) ein einstückiges Bauteil ist, oder dass die Lagerhülse (4) aus zwei axial aneinander anschließenden Lagerhülsenabschnitten (4a, 4b) besteht.

9. Gleitlageranordnung nach Anspruch 8, **dadurch gekennzeichnet, dass** bei einer zweiteiligen Lagerhülse (4) die Trennebene (18) in einer der Nutflanken der lagerhülsenseitigen Radialnut (12) liegt.

10. Gleitlageranordnung nach einem der vorangehenden Ansprüche, **dadurch gekennzeichnet, dass** die härtere Lauffläche (6) der Lagerhülse (4) mittels einer Hartstoffbeschichtung gebildet ist.

## Claims

1. Sliding bearing arrangement of a rotary element on a bearing bolt, comprising a bearing bolt (2) which has at least one lubricant channel (11) which opens out on the outside of the bolt, a bearing sleeve (4) which is arranged in a rotationally fixed manner on the said bearing bolt and has a first running surface (6) which is formed on the outer periphery, and a rotary element (3) which is rotatably mounted on the bearing sleeve (4) and has a second running surface (7) which is formed on the inner periphery and is mounted in a sliding manner on the first running surface (6), **characterized in that** the bearing sleeve (4) has a radial groove (12), which is formed on the inner periphery and communicates with the radial lubricant channel (11), and at least one aperture (14) which branches away radially from the said radial groove and is open in the direction of the rotary element (3), and **in that** the rotary element (3) has a radial groove (17) which is formed on the inner periphery and communicates with the aperture (14), wherein the first running surface (6) is harder than the second running surface (7).

2. Sliding bearing arrangement according to Claim 1, **characterized in that** the radial groove (17) which is provided on the rotary element (3) is inserted directly into the rotary element (3), or **in that** the radial groove (17) which is provided on the rotary element (3) is formed by means of two sleeves which are pressed into the rotary element (3) and are axially spaced apart from one another in order to form the radial groove (17) on the rotary element (3).

3. Sliding bearing arrangement according to Claim 1 or 2, **characterized in that** the radial groove (17) which is provided on the rotary element (3) has a rectangular, trapezoidal, rounded, semicircular or recessed cross section.

4. Sliding bearing arrangement according to one of the preceding claims, **characterized in that** the bearing sleeve-side aperture (14) opens out into an axially extending lubricant pocket (15) which is made in the first running surface (6).

5. Sliding bearing arrangement according to Claim 4, **characterized in that** the lubricant pocket (15) is embodied as an axial groove (16) which extends over at least half the width of the first running surface (6).

6. Sliding bearing arrangement according to one of the preceding claims, **characterized in that** two axial bearing discs (5) are provided which are arranged in a rotationally fixed manner on the bearing bolt (2) and against which the axially movable rotary element (3) runs, and **in that** at least one axial groove (13) branches away from the bearing sleeve-side radial groove (12) in the direction of each axial bearing sleeve end side and opens out on the respective bearing sleeve end side.

7. Sliding bearing arrangement according to Claim 6, **characterized in that** the two axial grooves (13) which branch away from the bearing sleeve-side radial groove (12) and open out on the respective bearing sleeve end side are in alignment with one another or are arranged peripherally offset in relation to one another.

8. Sliding bearing arrangement according to one of the preceding claims, **characterized in that** the bearing sleeve (4) is an integral component, or **in that** the bearing sleeve (4) consists of two bearing sleeve sections (4a, 4b) which axially adjoin one another.

9. Sliding bearing arrangement according to Claim 8, **characterized in that**, in the case of a two-part bearing sleeve (4), the separating plane (18) lies in one of the groove flanks of the bearing sleeve-side radial groove (12) .

10. Sliding bearing arrangement according to one of the preceding claims, **characterized in that** the harder running surface (6) of the bearing sleeve (4) is formed by means of a coating of hard material.

## Revendications

1. Agencement de palier lisse d'un élément rotatif sur un boulon de palier, comprenant un boulon de palier (2) qui présente au moins un canal de lubrifiant (11) débouchant au niveau du côté extérieur du boulon, une douille-palier (4) disposée de manière solidaire en rotation sur celui-ci, avec une première surface de roulement (6) réalisée sur la périphérie extérieure, et un élément rotatif (3) supporté à rotation sur la douille-palier (4), avec une deuxième surface de roulement (7) réalisée sur la périphérie intérieure, qui est supportée de manière glissante sur la première surface de roulement (6), **caractérisé en ce que** la douille-palier (4) présente une rainure radiale (12) réalisée sur la périphérie intérieure, communiquant avec le canal de lubrifiant radial (11) et au moins un orifice (14) partant radialement de cette rainure radiale, ouvert vers l'élément rotatif (3), et **en ce que** l'élément rotatif (3) présente une rainure radiale (17) réalisée sur la périphérie intérieure, communiquant avec l'orifice (14), la première surface de roulement (6) étant plus dure que la deuxième surface de roulement (7).

2. Agencement de palier lisse selon la revendication 1, **caractérisé en ce que** la rainure radiale (17) prévue sur l'élément rotatif (3) est réalisée directement dans l'élément rotatif (3) ou **en ce que** la rainure radiale (17) prévue sur l'élément rotatif (3) est formée au moyen de deux douilles espacées axialement l'une de l'autre, pressées dans l'élément rotatif (3), pour former la rainure radiale (17) sur l'élément rotatif (3).

3. Agencement de palier lisse selon la revendication 1 ou 2, **caractérisé en ce que** la rainure radiale (17) prévue sur l'élément rotatif (3) présente une section transversale rectangulaire, trapézoïdale, arrondie, semi-circulaire ou renfoncée.

4. Agencement de palier lisse selon l'une quelconque des revendications précédentes, **caractérisé en ce que** l'orifice (14) du côté de la douille-palier débouche dans une cavité de lubrifiant (15) s'étendant axialement, réalisée dans la première surface de roulement (6).

5. Agencement de palier lisse selon la revendication 4, **caractérisé en ce que** la cavité de lubrifiant (15) est réalisée sous forme de rainure axiale (16) qui s'étend sur au moins la moitié de la largeur de la première surface de roulement (6).

6. Agencement de palier lisse selon l'une quelconque des revendications précédentes, **caractérisé en ce que** deux disques de paliers axiaux (5) disposés de manière solidaire en rotation sur le boulon de palier (2) sont prévus, contre lesquels roule l'élément rotatif déplaçable axialement (3), et **en ce qu'**au moins une rainure axiale (13) qui débouche au niveau du côté frontal respectif de la douille-palier part de la rainure radiale (12) du côté de la douille-palier jusqu'à chaque côté frontal axial de la douille-palier.

7. Agencement de palier lisse selon la revendication 6, **caractérisé en ce que** les deux rainures axiales (13) partant de la rainure radiale (12) du côté de la douille-palier et débouchant au niveau du côté frontal respectif de la douille-palier sont en affleurement l'une avec l'autre ou sont disposées de manière décalée l'une par rapport à l'autre sur la périphérie.

8. Agencement de palier lisse selon l'une quelconque des revendications précédentes, **caractérisé en ce que** la douille-palier (4) est un composant d'une seule pièce ou **en ce que** la douille-palier (4) se compose de deux portions de douille-palier (4a, 4b) se raccordant axialement l'une à l'autre.

9. Agencement de palier lisse selon la revendication 8, **caractérisé en ce que** dans le cas d'une douille-palier (4) en deux parties, le plan de séparation (18) est situé dans l'un des flancs de rainure de la rainure radiale (12) du côté de la douille-palier.

10. Agencement de palier lisse selon l'une quelconque des revendications précédentes, **caractérisé en ce que** la surface de roulement plus dure (6) de la douille-palier (4) est formée au moyen d'un revêtement en matériau dur.
